# EUROPEAN PATENT APPLICATION

(11) **EP 3 118 870 A1**
(43) Date of publication of application: **18.01.2017**
(21) Application number: 16177186.0
(22) Date of filing: 30.06.2016
(51) Int. Cl.: H01F 41/02, H02K 15/03, H02K 1/27

(54) **MANUFACTURING METHOD OF ROTOR AND ROTOR**

(30) Priority: 03.07.2015 JP 2015134251
(71) Applicant: JTEKT Corporation, Chuo-ku, Osaka-shi Osaka 542-8502 (JP)
(72) Inventor: MIO, Takumi, Osaka-shi, Osaka 542-8502 (JP); NISHI, Koji, Osaka-shi, Osaka 542-8502 (JP); TAMURA, Takashi, Osaka-shi, Osaka 542-8502 (JP); KIMOTO, Yusuke, Osaka-shi, Osaka 542-8502 (JP)
(74) Representative: Winter, Brandl, Fürniss, Hübner, Röss, Kaiser, Polte - Partnerschaft mbB

(57) **Abstract**

In a method for manufacturing a rotor, each magnetic steel sheet (11) has protrusions (111) on its one surface (11f) and has recesses (112) on the other surface (11g) at positions corresponding to the protrusions (111). The plurality of magnetic steel sheets (11) are joined together as the protrusions (111) of each magnetic steel sheet (11) are fitted in the recesses (112) of its adjoining magnetic steel sheet. A shaft member (20) is inserted into a rotor core (10) in the same direction as that in which the protrusions (111) protrude.

## Description

### BACKGROUND OF THE INVENTION

### 1. Field of the Invention

The present invention relates to methods for manufacturing a rotor and rotors.

### 2. Description of the Related Art

Japanese Patent Application Publication No. 2014-176127 (JP 2014-176127 A) describes that protrusions and recesses are formed on the surfaces of each magnetic steel sheet to join the plurality of magnetic steel sheets together by clinching of the recesses and the protrusions. Japanese Patent Application Publication No. 2015-100157 (JP 2015-100157 A) describes that magnets are inserted into magnet insertion holes in a rotor core formed by stacking a plurality of magnetic steel sheets on each other, and the magnet insertion holes are filled with a resin material serving as a binder, whereby the magnets are held in the rotor core. Japanese Patent Application Publication No. 2013-214665 (JP 2013-214665 A) describes a method for producing a green compact by compacting magnetic particles. In this method, a cavity of a tubular die (stationary die) is filled with magnetic particles, and the magnetic particles are compacted by first and second punches to produce a green compact.

In JP 2014-176127 A, the magnetic steel sheets are joined together by clinching of the recesses and the protrusions. However, the clinching force between the recess and the protrusion may be reduced when a shaft member serving as an output shaft of a motor is press-fitted in a rotor core after manufacturing of the rotor core.

In the manufacturing method of JP 2015-100157 A, clearance need be provided between the magnet insertion hole and the magnet so as to allow the magnet insertion holes of the rotor core to be filled with the resin material serving as a binder. The outer shape of the magnets need also be somewhat smaller than the magnet insertion holes in order to facilitate insertion of the magnets into the magnet insertion holes. Moreover, the magnets having a tilted outer peripheral surface need be formed in view of mold releasability. For these reasons, the volume ratio of the magnets to the rotor core is reduced. It is therefore desired to improve motor performance by increasing the volume ratio of the magnets.

### SUMMARY OF THE INVENTION

It is one object of the present invention to provide a method for manufacturing a rotor which can restrain reduction in clinching force between a protrusion and a recess which is caused by press-fitting a shaft member into a rotor core, and a rotor.

A method for manufacturing a rotor according to one aspect of the invention is a method for manufacturing a rotor including a rotor core having a central hole and a magnet hole that opens to both sides in an axial direction, a shaft member fitted through the central hole of the rotor core, and a magnet placed in the magnet hole.

This method includes: forming the rotor core by stacking a plurality of magnetic steel sheets in the axial direction; and inserting, after the formation of the rotor core, the shaft member through the central hole of the rotor core with an end face of the rotor core being supported.

Each of the magnetic steel sheets has a protrusion on its one surface and has a recess on the other surface at a position corresponding to the protrusion. The plurality of magnetic steel sheets are joined together as the protrusion of each magnetic steel sheet is fitted in the recess of its adjoining magnetic steel sheet. The shaft member is inserted into the rotor core in the same direction as that in which the protrusion protrudes.

Since the direction in which the shaft member is inserted into the rotor core coincides with the direction in which the protrusion protrudes, a force in such a direction that the protrusion is pressed into the recess is applied by a force that is applied to insert the shaft member into the central hole of the rotor core. The protrusion is therefore more firmly joined to the recess than before the shaft member is inserted. A clinching force between the protrusion and the recess can therefore be increased by inserting the shaft member into the rotor core. As a result, gaps between the magnetic steel sheets stacked on each other are reduced.

A rotor according to another aspect of the present invention is a rotor manufactured by the method of the above aspect.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is an axial sectional view of a rotor according to an embodiment;
FIG. 2 is a flowchart of a method for manufacturing the rotor;
FIG. 3A is a schematic view showing an initial state in the step of producing mixed powder (magnetic particles and a lubricant) in step S13 of FIG. 2;
FIG. 3B is a schematic view showing the state at the time the step of producing the mixed powder is finished;
FIG. 4 is a sectional view schematically showing the state where the magnetic particles have been mixed with a binder in step S15 of FIG. 2;
FIG. 5A is a view showing a magnetic steel sheet formed in step S21 as viewed in the axial direction;
FIG. 5B is a sectional view of the magnetic steel sheet taken along line A-A in FIG. 5A;
FIG. 6 is an enlarged view of a portion C in FIG. 5B;
FIG. 7 is an axial sectional view of a rotor core formed in step S22 of FIG. 2, taken along line B-B in FIG. 5A;
FIG. 8 is an axial sectional view of the rotor core having a shaft member inserted therethrough in step S31 of FIG. 2;
FIG. 9 is an axial sectional view of the rotor core with dies being placed thereon in step S41 of FIG. 2;
FIG. 10 is an axial sectional view of the rotor core with a material of magnets being placed in magnet holes in step S42 of FIG. 2;
FIG. 11 is an axial sectional view of the rotor core with the magnets being formed by punch members in step S43 of FIG. 2; and
FIG. 12 is a sectional view schematically showing the configuration of the magnets after compacts of the magnets formed by compression in step S44 of FIG. 2 are heated.

### DETAILED DESCRIPTION OF EMBODIMENTS

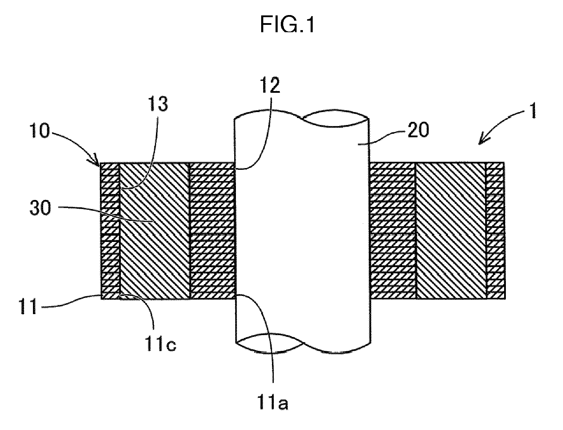

A rotor 1 of an embodiment is applied to rotors of interior permanent magnet (IPM) motors and rotors of surface permanent magnet (SPM) motors. The rotor 1 is preferably used as a rotor of an IPM motor. As shown in FIG. 1, the rotor 1 includes a rotor core 10, a shaft member 20, and magnets 30. The rotor core 10 is formed by stacking a plurality of magnetic steel sheets 11 on each other. The plurality of magnetic steel sheets 11 are joined together by clinching. The shaft member 20 is an output shaft of a motor and is press-fitted in a central hole 12 of the rotor core 10. In the present embodiment, the shaft member 20 is spline-fitted in the central hole 12 of the rotor core 10. The magnets 30 are placed in a plurality of magnet holes 13 of the rotor core 10. Each magnet hole 13 is formed between the central hole 12 and the outer peripheral surface of the rotor core 10 and extends through the rotor core 10 so as to open to both sides in the axial direction of the rotor core 10.

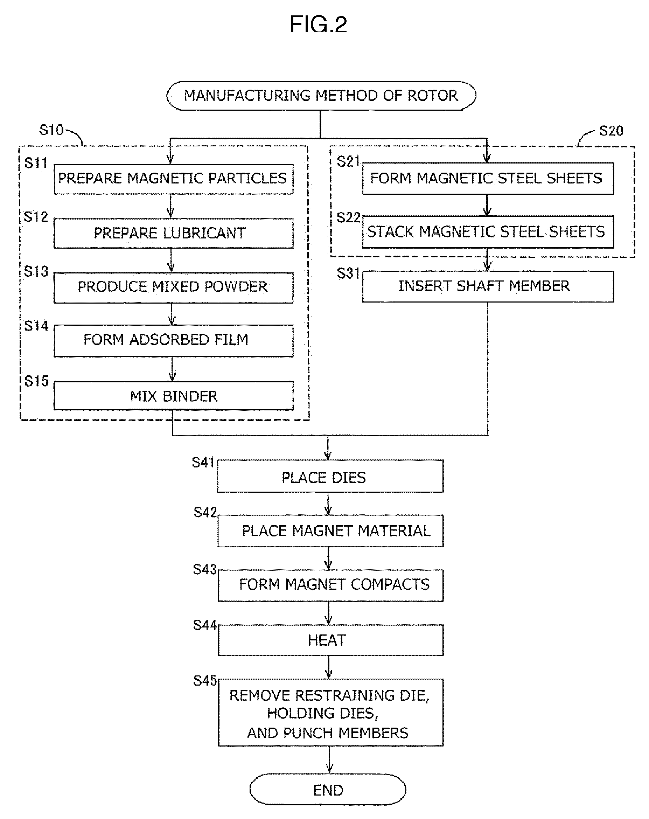

A method for manufacturing the rotor 1 will be described with reference to FIGS. 2 to 12. The method for manufacturing the rotor 1 includes the steps of producing a material of the magnets 30 (step S10), forming the rotor core 10 (step S20), inserting the shaft member 20 through the rotor core 10 (step S31), and subsequently forming the magnets 30 in the rotor core 10 (steps S41 to S45).

The step of producing a material of the magnets 30 (step S10) will be described with reference to steps S11 to S15 of FIG. 2 and FIGS. 3A, 3B, and 4. As shown in step S11 of FIG. 2, magnetic particles 31 as one of constituents of the material of the magnets 30 are prepared.

The magnetic particles 31 are powder or an aggregation of particles of a magnetic material. The magnetic material of the magnetic particles 31 is preferably, but not limited to, a hard magnetic material. Examples of the hard magnetic material include a ferrite magnet, an Al-Ni-Co magnet, a rare earth magnet containing a rare earth element, and an iron nitride magnet.

It is preferable that the magnetic particles 31 of the hard magnetic material be made of one or more of Fe-N compounds and R-Fe-N compounds (where R represents a rare earth element). The rare earth element represented by R can be any element known as what is called a rare earth element (Sc, Y, La, Ce, Pr, Nd, Pm, Sm, Eu, Gd, Tb, Dy, Ho, Er, Tm, Yb, Lu, Ac, Th, Pa, U, Np, Pu, Am, Cm, Bk, Cf, Es, Fm, Md, No, or Lr) and is more preferably any rare earth element other than Dy (R represents a rare earth element other than Dy). Of these rare earth elements, light rare earth elements are particularly preferable, and Sm is the most preferable among the light rare earth elements. As used herein, the "light rare earth elements" refers to those lanthanoids having a lighter atomic weight than Gd, namely La to Eu. Fe-N compounds are contained in iron nitride magnets, and R-Fe-N compounds are contained in rare earth magnets.

The composition of the magnetic particles 31 is not specifically limited as long as the magnetic particles 31 are made of an Fe-N compound and/or an R-Fe-N compound. The magnetic particles 31 are most preferably Sm₂Fe₁₇N₃ or Fe₁₆N₂ powder.

The particle size (average particle size) of the magnetic particles 31 is not limited. It is preferable that the average particle size (D50) be about 2 to 5 µm. The magnetic particles 31 are magnetic particles having no oxide film formed on their surfaces.

As shown in step S12 of FIG. 2, a lubricant 32 is prepared. The lubricant 32 is preferably a substance (solid lubricant) that is solid under normal conditions (in the atmosphere at normal temperature). In the present embodiment, the lubricant 32 is a powder lubricant.

The lubricant 32 is a metal soap lubricant (solid lubricant powder). An example of the lubricant 32 is powder of a stearic acid-based metal such as zinc stearate. The average particle size (D50) of the lubricant 32 is about 10 µm. It is preferable that the average particle size of the lubricant 32 be larger than that of the magnetic particles 31. The specific gravity of the lubricant 32 is lower than that of the magnetic particles 31. Accordingly, increasing the initial particle size of the lubricant 32 to some degree can increase the mass of each particle of the lubricant 32, which can restrain the lubricant 32 from scattering when the lubricant 32 is mixed with the magnetic particles 31 in step S13 described below.

The magnetic particles 31 and the lubricant 32 can be mixed in any ratio. The mixing ratio of the magnetic particles 31 to the lubricant 32 is preferably 80 to 90 vol% to 5 to 15 vol%. The lubricant is not limited to a solid substance. For example, a thermosetting silicone composition as a binder described below may be used as both the lubricant and the binder. An additive may further be mixed with the magnetic particles 31 and the lubricant 32. An example of the additive is an organic solvent that disappears when heated subsequently.

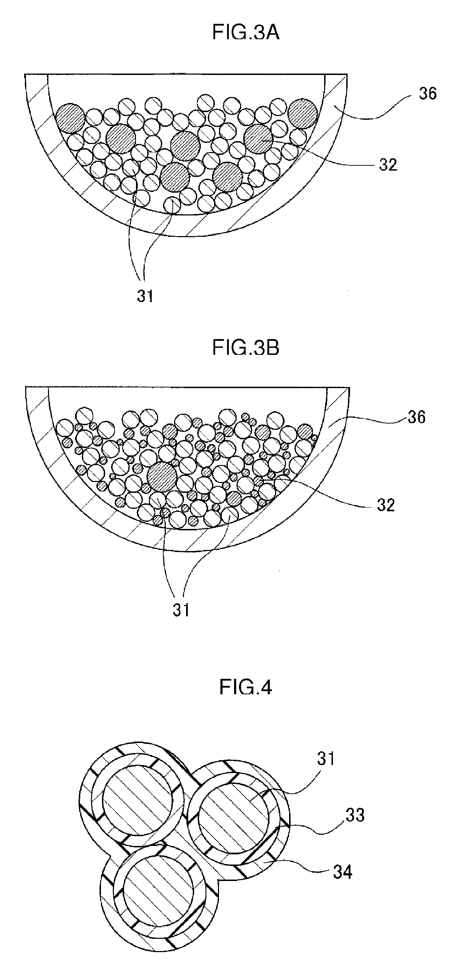

As shown in step S13 of FIG. 2, the magnetic particles 31 and the lubricant 32 prepared in the above two steps are mixed to produce mixed powder. The mixed powder 31, 32 is produced by grinding and mixing the magnetic particles 31 and the lubricant 32 in a mixing container 36 as shown in FIG. 3A. As shown in FIG. 3B, this grinding and mixing operation makes the particles of the lubricant 32 having low bond strength smaller, so that the overall particle size of the lubricant 32 is reduced. The lubricant 32 thus consists of particles of different sizes at the time this step is finished.

This grinding and mixing operation can reduce aggregation of the magnetic particles 31 in the mixed powder 31, 32 (can crush secondary particles of the magnetic particles 31) and can reduce the particle size of the lubricant 32. That is, the smaller particles of the lubricant 32 can be present near each of the magnetic particles 31.

Thereafter, as shown in step S14 of FIG. 2, the mixed powder 31, 32 is heated to form an adsorbed film 33 on the surfaces of the magnetic particles 31. Specifically, the mixed powder 31, 32 produced by mixing the magnetic particles 31 and the lubricant 32 in the previous step (step S13) is heated at a heating temperature T1 to form an adsorbed film 33 of the lubricant 32 on the surfaces of the magnetic particles 31. The heating temperature T1 of the mixed powder 31, 32 is lower than a decomposition temperature T2 at which the magnetic particles 31 decompose, and is equal to or higher than a melting point T3 of the lubricant 32 (T3 ≤ T1 < T2).

Heating the mixed powder 31, 32 at the heating temperature T1 does not decompose the magnetic particles 31 but melts the lubricant 32. The molten lubricant 32 flows along the surfaces of the magnetic particles 31 and covers the surfaces of the magnetic particles 31. The adsorbed film 33 is thus formed on the surfaces of the magnetic particles 31.

The heating time at the heating temperature T1 is not limited as it depends on the amount of heat that is applied to the mixed powder 31, 32. As the heating temperature T1 increases, the amount of heat that is applied to the mixed powder 31, 32 per hour increases accordingly. The heating time can therefore be reduced as the heating temperature T1 increases. It is preferable to increase the heating time in the case where the heating temperature T1 is relatively low.

As the amount of heat that is applied to the mixed powder 31, 32 increases by controlling the heating temperature T1 and the heating time, the resultant adsorbed film 33 is more aggregated on the surfaces of the magnetic particles 31, no break is caused in the adsorbed film 33 in a subsequent compacting step (step S43).

Subsequently, for example, an uncured binder 34 comprised of a silicone composition is placed on the surfaces of the magnetic particles 31 with the adsorbed film 33 formed thereon, as shown in step S15 of FIG. 1. The binder 34 is in the form of a gel or liquid at room temperature and thus has fluidity at room temperature. The binder 34 is mixed with the magnetic particles 31, whereby the binder 34 is placed on the surfaces of the magnetic particles 31. In this state, the binder 34 is present between adjoining ones of the magnetic particles 31, as shown in a schematic sectional view of FIG. 4. In this state, the binder 34 does not bind all the magnetic particles 31 together, but is merely present between some of the magnetic particles 31. The material of the magnets 30 at this time is therefore in the form of powder and does have fluidity like a material of bond magnets. Namely, the material of the magnets 30 at this time cannot be injection molded like the material of bond magnets.

The silicone composition as the binder 34 can be a composition whose main chain consists of siloxane bonds. More specifically, the silicone composition can be a silicone resin. The silicone composition is in an uncured state (in the form of a gel or liquid) when placed on the surfaces of the magnetic particles 31 and are cured in a subsequent step. The curing temperature (curing start temperature) T4 of such a thermosetting silicone composition is lower than the decomposition temperature T2 of the magnetic particles 31.

The binder 34 can be mixed in any ratio. For example, the mixing ratio of the binder 34 may be 5 to 15 vol%, more preferably 8 to 12 vol%, with respect to 100 vol% of the magnetic particles 31 (with the adsorbed film 33 formed thereon). A curing method for the binder 34 is not limited. For example, the binder 34 may be cured by heating or ultraviolet radiation, or a reaction initiator such as water may be brought into contact with the binder 34 to start curing of the binder 34.

The step of forming the rotor core 10 (step S20) will be described with reference to S21 and S22 of FIG. 2 and FIGS. 5A, 5B, 6, and 7. As described above, the rotor core 10 is formed by stacking the plurality of magnetic steel sheets 11 on each other.

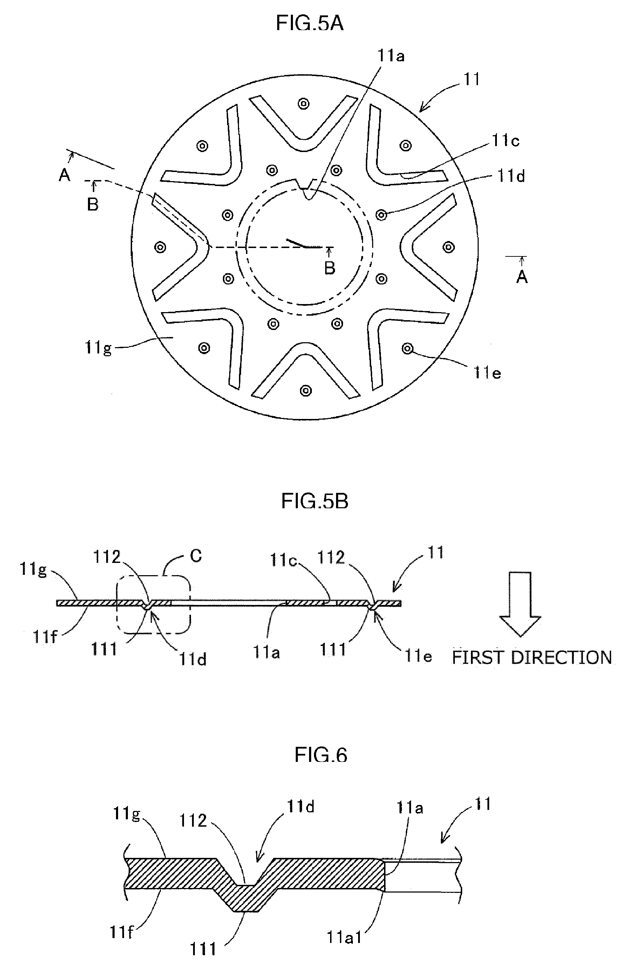

Each magnetic steel sheet 11 is formed into the shape shown in FIGS. 5A and 5B by pressing a flat steel sheet (S21 of FIG. 2). Each magnetic steel sheet 11 has a circular outer peripheral surface and has a central hole 11a and a plurality of holes 11c. The central hole 11a is a spline hole formed in the center of each magnetic steel sheet 11 by punching. The plurality of holes 11c are formed between the central hole 11a and the outer peripheral surface of the magnetic steel sheet 11 at regular angular intervals in the circumferential direction by punching so as to extend through the magnetic steel sheet 11. That is, the holes 11c are through holes extending through the magnetic steel sheet 11 in the axial direction and are arranged so as to surround the axis of the rotor core 10. In the present embodiment, the holes 11c have a V-shape that opens outward in the radial direction. However, the holes 11a may have other shapes.

The punching direction in which each magnetic steel sheet 11 is punched to form the central hole 11 a and the holes 11c coincides with the first direction shown in FIG. 5. A shear droop and a burr 11a1 are formed at the peripheral edge of the central hole 11 a in the punching direction. That is, the central hole 11a has a slightly raised peripheral edge on the side where punching is finished, and a slightly recessed edge on the side where punching is started.

The magnetic steel sheet 11 that contacts a support member 40 has first clinching portions 11d and second clinching portions 11e so that the magnetic steel sheet 11 is joined to the magnetic steel sheet 11 that is stacked thereon. Each of the first clinching portions 11d is formed at an angular position located between corresponding two of the holes 11c which adjoin each other in the circumferential direction and located radially inside the holes 11c. As shown in FIG. 6, each of the first clinching portions 11d has a protrusion 111 formed in one surface 11f (the lower surface in FIG. 6) and a recess 112 formed in the other surface 11g (the upper surface in FIG. 6). The protrusion 111 and the recess 112 are thus formed at the same position on the front and back surfaces of the magnetic steel sheet 11.

Each of the second clinching portions 11e is formed inside the V-shape of a corresponding one of the holes 11c, namely radially outside the corresponding one of the holes 11c. As shown in FIG. 5B, each of the second clinching portions 11e has a protrusion 111 and a recess 112 like the first clinching potions 11d. The protrusions 111 of the first and second clinching portions 11d, 11e protrude in the same direction as the punching direction (first direction) for the central hole 11a.

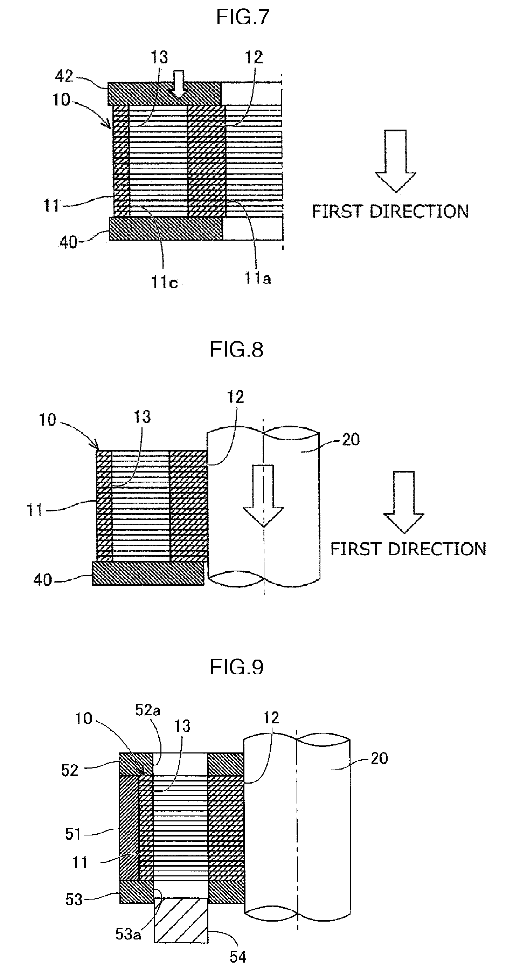

When one magnetic steel sheet 11 is stacked on another, a clinching member 42 is moved in the first direction. As a result, the first clinching portions 11d are formed in the former (upper) magnetic steel sheet 11 by first clinching protrusions, not shown, of the clinching member 42, and the protrusions 111 of the first clinching portions 11d thus formed are fitted in the recesses 112 of the first clinching portions 11d in the latter (lower) magnetic steel sheet 11. Moreover, the second clinching portions 11e are formed in the former (upper) magnetic steel sheet 11 by second clinching protrusions, not shown, of the clinching member 42, and the protrusions 111 of the second clinching portions 11e thus formed are fitted in the recesses 112 of the second clinching portions 11e in the latter (lower) magnetic steel sheet 11. The clinching member 42 has the first clinching protrusions and the second clinching protrusions on its surface facing the support member 40, and the first clinching protrusions and the second clinching protrusions protrude in the first direction. The magnetic steel sheets 11 are thus stacked on each other as shown in FIG. 7 to produce the rotor core 10 (S22 of FIG. 2). At this time, the magnetic steel sheets 11 stacked on each other are joined together as the protrusions 111 are fitted in the recesses 112.

The rotor core 10 thus produced has the central hole 12 connecting the central holes 11a of the magnetic steel sheets 11 in the axial direction, and the magnet holes 13 each connecting corresponding ones of the holes 11c of the magnetic steel sheets 11 in the axial direction.

The step of inserting the shaft member 20 through the rotor core 10 (step S31) will be described with reference to S31 of FIG. 2 and FIG. 8. The shaft member 20 is inserted through the central hole 12 of the rotor core 10 (inserting step). The outer peripheral surface of the shaft member 20 is a spline surface, and the central hole 12 of the rotor core 10 is a spline hole. As the shaft member 20 is inserted into the central hole 12 of the rotor core 10, the shaft member 20 is spline-fitted in the central hole 12 of the rotor core 10.

As shown in FIG. 8, with an end face of the rotor core 10 being supported by the support member 40 (namely, with the movement of the rotor core 10 being restricted by the support member 40), the shaft member 20 is inserted into the rotor core 10 from the opposite side of the rotor core 10 from the support member 40. As shown in FIG. 8, the shaft member 20 is inserted into the rotor core 10 in the first direction. That is, the shaft member 20 is inserted into the rotor core 10 in the same direction as the punching direction in which the magnetic steel sheets 11 are punched and the direction in which the protrusions 111 of the magnetic steel sheets 11 protrude. That is, the support member 40 contacts the surface 11f of the magnetic steel sheet 11 from which the protrusions 111 protrude to support the end face of the rotor core 10.

A force in such a direction that the protrusions 111 are pressed into the recesses 112 is applied by a force that is applied to insert the shaft member 20 into the central hole 12 of the rotor core 10 in the first direction. The protrusions 111 are therefore more firmly joined to the recesses 112 than before the shaft member 20 is inserted. That is, this force is applied in such a direction that the gaps between the magnetic steel sheets 11 stacked on each other are reduced.

Due to the force that is applied to insert the shaft member 20 into the central hole 12 of the rotor core 10 in the first direction, the shaft member 20 is relatively moved in the same direction as that in which the burr 11a1 of the central hole 11a of each magnetic steel sheet 11 projects. Accordingly, due to the operation of inserting the shaft member 20, the force is applied in such a direction that the gaps between the magnetic steel sheets 11 stacked on each other are reduced. If the shaft member 20 is relatively moved in the opposite direction to that in which the burr 11a1 of the central hole 11a projects, the shaft member 20 is caught by the edge of the burr 11a1 (the lower edge of the central hole 11a in FIG. 6), and the force may be applied in such a direction that the gaps between the magnetic steel sheets 11 stacked on each other are increased. However, since the shaft member 20 is inserted in the above direction, the gaps between the magnetic steel sheets 11 stacked on each other are not increased.

The step of forming the magnets 30 (steps S41 to S45) will be described with reference to S41 to S45 of FIG. 2 and FIGS. 9 to 12. The material of the magnets 30 prepared in S11 to S 15 is placed in the magnet holes 13 of the rotor core 10 to form the magnets 30. The material of the magnets 30 need be heated after being compacted. The rotor core 10 formed in the above step, in particular the rotor core 10 with the shaft member 20 inserted therethrough, is used as a part of a forming die. This will be described in detail below.

As shown in step S41 of FIG. 2 and FIG. 9, dies 51, 52, 53, 54 each containing a heater, not shown, are placed on the rotor core 10 with the shaft member 20 inserted therethrough. First, the restraining die 51 is placed on the outer periphery of the rotor core 10 with the shaft member 20 inserted therethrough. The restraining die 51 is formed by a plurality of arc-shaped members. These arc-shaped members are formed by dividing a tubular member into a plurality of parts in the circumferential direction. The restraining die 51 contacts the outer peripheral surface of the rotor core 10 and thus restricts radially outward deformation of the rotor core 10.

As described above, the shaft member 20 has been inserted through the rotor core 10. That is, the shaft member 20 functions as a restraining die placed on the inner periphery of the rotor core 10. The shaft member 20 thus restricts radially inward deformation of the rotor core 10.

As shown in FIG. 9, the holding dies 52, 53 are placed on both end faces of the rotor core 10. The holding dies 52, 53 have a shape substantially similar to that of the magnetic steel sheets 11. That is, the holding dies 52, 53 have holes 52a, 53a having the same shape as the magnet holes 13. However, the holding dies 52, 53 do not have the first and second clinching portions having the same shape as the first and second clinching portions 11d, 11e of the magnetic steel sheets 11. The holding die 53 has recesses, not shown, that receive the first and second clinching portions 11d, 11e so as not to interfere with the first and second clinching portions 11d, 11e.

The thickness of each holding die 52, 53 is larger than that of the magnetic steel sheet 11. Although not shown in the figure, the outer peripheries of the holding dies 52, 53 are fastened in the axial direction by the restraining die 51 or a die fastened to the restraining die 51. The rotor core 10 is thus compressed in the axial direction by the holding dies 52, 53.

The restraining die 51 and the shaft member 20 thus restrict radially outward and radially inward deformation of the rotor core 10, and the holding dies 52, 53 restrict axial deformation of the rotor core 10. Moreover, the magnet holes 13 communicate with the holes 52a, 53a of the holding dies 52, 53 and open to both sides in the axial direction.

Thereafter, a part of the lower punch member 54 is inserted into the holes 53a of the holding die 53. That is, the lower punch member 54 closes the openings of the holes 53a of the holding die 53.

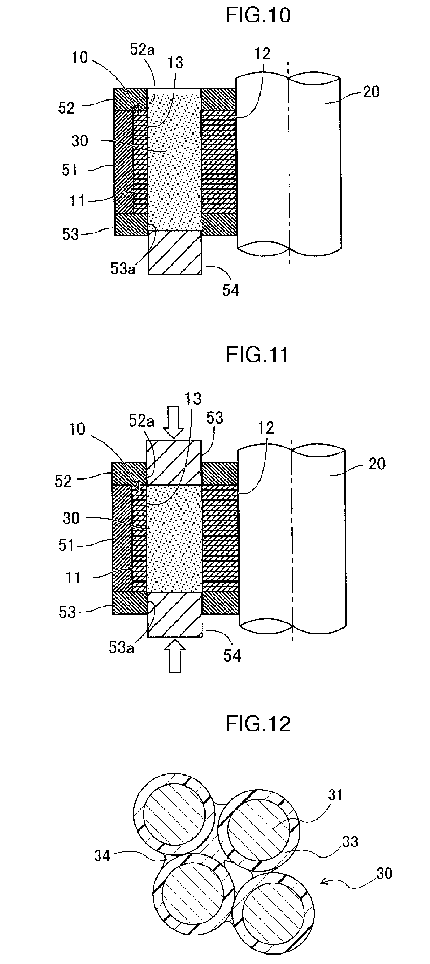

Subsequently, as shown in step S42 of FIG. 2 and FIG. 10, the material of the magnets 30 is placed in the magnet holes 13 (placing step). The material of the magnets 30 is the powder produced in steps S11 to S15 of FIG. 2. As shown in FIG. 10, the material of the magnets 30 in the form of powder is placed not only in the magnet holes 13 of the rotor core 10 but also in the holes 52a, 53a of the holding dies 52, 53. The amount of material of the magnets 30 is decided in view of a decrease in volume of the material of the magnets 30 which is caused when the gaps between the particles of the material of the magnets 30 are reduced in a subsequent forming step.

Thereafter, as shown in step S43 of FIG. 2 and FIG. 11, a part of an upper punch member 55 is inserted into the holes 52a of the holding die 52, and the upper punch member 55 and the lower punch member 54 are moved in the axial direction. The material of the magnets 30 in each magnet hole 13 is thus compressed in the axial direction of the rotor through the openings on both sides of the magnet hole 13 and is formed into a compact (forming step). The compact in each magnet hole 13 is repeatedly compressed and decompressed by the upper punch member 55 and the lower punch member 54. This increases the density of the compact. The compacts of the magnets 30 thus formed fill a corresponding range of the magnet holes 13 of the rotor core 10. In the above embodiment, the compact is formed in each magnet hole 13 by placing the material of the magnets 30 once. In another embodiment, the compact may be formed so as to stack layers in each magnet hole 13 by repeatedly placing the material of the magnets 30 in each magnet hole 13 and compressing and decompressing the material of the magnets 30 by the upper punch member 55 and the lower punch member 54. In the case of bond magnets, the volume of the material is not reduced by compression. The material of the magnets 30 of the present embodiment is different from that of the bond magnets in this regard as well.

The magnet holes 13 of the rotor core 10 expand when the material of the magnets 30 is compressed in the magnet holes 13. However, since the restraining die 51, the shaft member 20, and the holding dies 52, 53 are placed on the outer periphery, the inner periphery, and both end faces of the rotor core 10 to restrict deformation of the rotor core 10, the rotor core 10 is not deformed when the material of the magnets 30 is compressed in the magnet holes 13.

The rotor core 10 is used as a part of the forming die and the material of the magnets 30 is in the form of powder. Accordingly, if gaps are present between the magnetic steel sheets 11, the material of the magnets 30 in the form of powder may enter the gaps. However, since the shaft member 20 has already been inserted through the rotor core 10 in step S31 of FIG. 2 and the holding dies 52, 53 compress the rotor core 10 in the axial direction, these gaps are significantly reduced. Accordingly, even though the rotor core 10 is used as a part of the forming die, entry of the material of the magnets 30 in the form of powder into the gaps between the magnetic steel sheets 11 is restricted. The material of the magnets 30 filling the magnet holes 13 is thus reliably formed into the compacts. That is, the compacts formed by compressing the material of the magnets 30 contact the inner peripheral surfaces of the magnet holes 13.

As shown in step S44 of FIG. 2 and FIG. 11, while the dies 51 to 53 and the punch members 54, 55 are kept in place on the rotor core 10 with the shaft member 20 inserted therethrough, the compacts thus formed by compressing the material of the magnets 30, namely the compacts of the magnets 30, are heated to a heating temperature T6 by the heaters of the dies 51 to 54 (heating step). The heating temperature T6 of the compacts of the magnets 30 is equal to or higher than the curing temperature T4 (curing start temperature) of the thermosetting silicone composition and lower than the decomposition temperature T2 of the magnetic particles 31. After the binder 34 is cured, the heaters of the dies 51 to 54 are turned off to allow the rotor core 10 and the compacts of the magnets 30 to be naturally cooled.

In the heated magnets 30, the magnetic particles 31 are bound together by the cured binder 34, as schematically shown in FIG. 12. Although not shown in the figure, the cured binder 34 binds the magnetic particles 31 to the inner peripheral surfaces of the magnet holes 13 of the rotor core 10. Each magnet 30 thus produced is therefore located in a corresponding one of the magnet holes 13 of the rotor core 10 substantially with no gap between the magnet 30 and the inner peripheral surface of the magnet hole 13. Very small voids may be formed between the magnetic particles 31 and between the inner peripheral surface of each magnet hole 13 and the magnetic particles 31.

Thereafter, as shown in step S45 of FIG. 2, the restraining die 51, the holding dies 52, 53, and the punch members 54, 55 are removed. The rotor 1 shown in FIG. 1 is thus completed.

As described above, the rotor 1 includes the rotor core 10 having the central hole 12 and the magnet holes 13 that open to both sides in the axial direction, the shaft member 20 fitted in the central hole 12 of the rotor core 10, and the magnets 30 disposed in the magnet holes 13. This method for manufacturing the rotor 1 includes the rotor core forming step (S22 of FIG. 2) of forming the rotor core 10 by stacking the plurality of magnetic steel sheets 11 in the axial direction, and the inserting step (S31 of FIG. 2) of, after the rotor core forming step (S22), inserting the shaft member 20 through the central hole 12 of the rotor core 10 with the end face of the rotor core 10 being supported.

Each magnetic steel sheet 11 has the protrusions 111 on its one surface 11f and has the recesses 112 on the other surface 11g at the positions corresponding to the protrusions 111. The plurality of magnetic steel sheets 11 are joined together as the protrusions 111 of each magnetic steel sheet 11 are fitted in the recesses 112 of its adjoining magnetic steel sheet 11. The shaft member 20 is inserted into the rotor core 10 in the same direction as that in which the protrusions 111 protrude.

Since the direction in which the shaft member 20 is inserted into the rotor core 10 coincides with the direction in which the protrusions 111 protrude, a force in such a direction that the protrusions 111 are pressed into the recesses 112 is applied by a force that is applied to insert the shaft member 20 into the central hole 12 of the rotor core 10. The protrusions 111 are therefore more firmly joined to the recesses 112 than before the shaft member 20 is inserted. The clinching force between the protrusion 111 and the recess 112 can therefore be increased by inserting the shaft member 20 into the rotor core 10. As a result, the gaps between the magnetic steel sheets 11 stacked on each other are reduced.

The through holes 11a, 11c corresponding to the central hole 12 and the magnet holes 13 are formed in each magnetic steel sheet 11 by punching, and the shaft member 20 is inserted into the rotor core 10 in the same direction as that in which each magnetic steel sheet 11 is punched.

The shear droop and the burr 11a1 are formed in the central hole 11a of each magnetic steel sheet 11 by punching. Due to the force that is applied to insert the shaft member 20 into the central hole 12 of the rotor core 10, the shaft member 20 is relatively moved in the same direction as that in which the burr 11a1 of the central hole 11a of each magnetic steel sheet 11 projects. Accordingly, due to the operation of inserting the shaft member 20, the force is applied in such a direction that the gaps between the magnetic steel sheets 11 stacked on each other are reduced. This can reduce escape of the magnetic particles 31 into the gaps between the magnetic steel sheets 11. If the shaft member 20 is relatively moved in the opposite direction to that in which the burr 11a1 of the central hole 11a projects, the shaft member 20 is caught by the edge of the burr 11a1, and the force may be applied in such a direction that the gaps between the magnetic steel sheets 11 stacked on each other are increased. However, since the shaft member 20 is inserted in the above direction, the gaps between the magnetic steel sheets 11 stacked on each other are not increased.

The method for manufacturing the rotor 1 further includes the placing step (S42 of FIG. 2) of, after the inserting step (S31 of FIG. 2), placing the material of the magnets 30 containing at least the magnetic particles 31 in the magnet holes 13, and the forming step (S43 of FIG. 2) of, after the placing step (S42 of FIG. 2), forming the compacts by compressing the material of the magnets 30 in the magnet holes 13 in the axial direction of the rotor 1 with the punch members 54, 55 by using the rotor core 10 as a part of the forming die.

In the forming step (S43), the rotor core 10 is used as a part of the forming die when the material of the magnets 30 is compressed to form the compacts. The magnets 30 thus formed need not be released from the rotor core 10 subsequently, and the rotor 1 can be manufactured with the magnets 30 being kept in the rotor core 10. Namely, no clearance need be provided between the rotor core 10 and the magnets 30 as in conventional examples. This can increase the volume ratio of the magnets 30 to the rotor core 10, whereby the motor performance can be improved.

The magnet holes 13 of the rotor core 10 expand when the material of the magnets 30 is compressed to form the compacts by using the rotor core 10 as a part of the forming die in the forming step (S43). However, since the shaft member 20 has already been inserted through the central hole 12 of the rotor core 10, radially inward deformation of the rotor core 10 is restricted by the shaft member 20. A high load can therefore be applied to the punch members 54, 55 to compress the material of the magnets 30, whereby the volume ratio of the magnetic particles 31 can be increased. The motor performance is improved in this respect as well.

It is herein assumed that the shaft member 20 is inserted into the central hole 12 of the rotor core 10 after the compacts are formed by compressing the material of the magnets 30 in the magnet holes 13. If the rotor core 10 is deformed inward in the radial direction when the material of the magnets 30 is compressed, press-fit allowance is increased. In this case, the shaft member 20 may not be able to be inserted into the central hole 12 of the rotor core 10, or in some cases, the magnets 30 may get cracked by the load that is applied to the magnets 30 when the shaft member 20 is inserted into the central hole 12 of the rotor core 10. However, the present embodiment does not have such problems.

The magnetic particles 31 are magnetic particles of a hard magnetic material made of one or more of Fe-N compounds and R-Fe-N compounds (where R represents a rare earth element). The method for manufacturing the rotor 1 further includes the heating step (S44 of FIG. 2) of, after the forming step (S43), heating the compacts of the magnets 30 kept in the magnet holes 13 at a temperature lower than the decomposition temperature T2 of the magnetic particles 31 to bind the magnetic particles 31 together. The rotor core 10 is thus used not only as a part of the forming die in the forming step but also as a stationary die in the heating step.

The binding force between the magnetic particles 31 is generally stronger when they are bound by sintering. However, the decomposition temperature T2 of the magnetic particles 31 made of the above compound(s) is lower than the sintering temperature. Accordingly, the magnetic particles 31 made of the above compound(s) cannot be sintered in the heating step. The binding force between the magnetic particles 31 made of the above compound(s) is therefore not strong. However, since the magnets 30 are not removed from the magnet holes 13 of the rotor core 10, the magnetic particles 31 need not be strongly bound together. The magnetic particles 31 need only be bound together to such a degree that the magnetic particles 31 are held together in the magnet holes 13. The manufacturing method of the present embodiment is therefore effective in the case of using the magnetic particles 31 made of the above compound(s).

The material of the magnets 30 contains the magnetic particles 31 and the binder 34 that binds the magnetic particles 31 together. In the heating step (S44), the binder 34 is cured by heating so that the magnetic particles 31 are bound together and bound to the magnet holes 13 by the cured binder 34. Since the binder 34 forming the magnets 30 thus binds the magnetic particles 31 to the magnet holes 13, no special binder is required to bind the magnets 30 to the magnet holes 13.

The method for manufacturing the rotor 1 according to the present embodiment includes: the rotor core forming step (S22) of forming the rotor core 10 by stacking the plurality of magnetic steel sheets 11 in the axial direction; the inserting step (S31) of, after the rotor core forming step (S22), inserting the shaft member 20 through the central hole 12 of the rotor core 10 thus formed; the placing step (S42) of, after the inserting step (S31), placing the material of the magnets 30 containing at least the magnetic particles 31 in the magnet holes 13; and the forming step (S43) of, after the placing step (S42), forming the compacts by compressing the material of the magnets 30 in the magnet holes 13 in the axial direction of the rotor 1 with the punch members 54, 55 by using the rotor core 10 as a part of the forming die.

The magnets 30 formed by this manufacturing method need not be released from the rotor core 10, and the rotor 1 can be manufactured with the magnets 30 being kept in the rotor core 10. This can increase the volume ratio of the magnets 30 to the rotor core 10, whereby the motor performance can be improved. Moreover, since the shaft member 20 has already been inserted through the central hole 12 of the rotor core 10, radially inward deformation of the rotor core 10 is restricted by the shaft member 20. A high load can therefore be applied to the punch members 54, 55 to compress the material of the magnets 30, whereby the volume ratio of the magnetic particles 31 can be increased. The motor performance is improved in this respect as well.

## Claims

1. A method for manufacturing a rotor including a rotor core having a central hole and a magnet hole that opens to both sides in an axial direction, a shaft member fitted through the central hole of the rotor core, and a magnet placed in the magnet hole, the method comprising:
forming the rotor core by stacking a plurality of magnetic steel sheets in the axial direction; and
inserting, after the formation of the rotor core, the shaft member through the central hole of the rotor core with an end face of the rotor core being supported, wherein
each of the magnetic steel sheets has a protrusion on its one surface and has a recess on the other surface at a position corresponding to the protrusion,
the plurality of magnetic steel sheets are joined together as the protrusion of each magnetic steel sheet is fitted in the recess of its adjoining magnetic steel sheet, and
the shaft member is inserted into the rotor core in the same direction as that in which the protrusion protrudes.

2. The method according to claim 1, wherein
through holes corresponding to the central hole and the magnet hole are formed in each of the magnetic steel sheets by punching, and
the shaft member is inserted into the rotor core in the same direction as that in which each of the magnetic steel sheets is punched.

3. The method according to claim 1 or 2, further comprising:
placing, after the insertion of the shaft member, a material of the magnet containing at least magnetic particles in the magnet hole; and
forming, after the placement of the material of the magnet, a compact by compressing the material in the magnet hole in the axial direction of the rotor with a punch member by using the rotor core as a part of a forming die.

4. The method according to claim 3, further comprising:
heating, after the formation of the compact, the compact kept in the magnet hole at a temperature lower than a decomposition temperature of the magnetic particles to bind the magnetic particles together, wherein
the magnetic particles are magnetic particles of a hard magnetic material made of one or more of Fe-N compounds and R-Fe-N compounds (where R represents a rare earth element).

5. The method according to claim 4, wherein
the material contains the magnetic particles and a binder that binds the magnetic particles together, and
in the heating of the compact, the binder is cured by heating so that the magnetic particles are bound together and bound to the magnet hole by the cured binder.

6. A rotor manufactured by the method according to any one of claims 1 to 5.
